# EUROPEAN PATENT APPLICATION

(11) **EP 3 128 807 A1**
(43) Date of publication of application: **08.02.2017**
(21) Application number: 16179574.5
(22) Date of filing: 14.07.2016
(51) Int. Cl.: H05B 33/08, B60Q 1/00

(54) **SEQUENTIAL CIRCUIT FOR LED LIGHTING DEVICE**

(30) Priority: 03.08.2015 JP 2015153075
(71) Applicant: PIAA Corporation, Tokyo 112-0005 (JP)
(72) Inventor: Ikeda, Taichi, Takasaki-shi, Gunma 370-0871 (JP); Sunaga, Akira, Takasaki-shi, Gunma 370-0871 (JP)
(74) Representative: Wallin, Nicholas James

(57) **Abstract**

A sequential circuit of the invention includes multiple LEDs, multiple switching elements, multiple resistors, and a controller. The multiple switching elements are provided corresponding to the multiple LEDs, and each switching element is connected in parallel with the corresponding LED. The multiple resistors are provided corresponding to the multiple LEDs, and each resistor is connected in series with the corresponding LED and the corresponding switching element. A power supply is applied to each resistor at the time of an instruction to start energization. The controller sequentially turns on the multiple LEDs. In addition, prior to turning on each of the LEDs, the controller turns on the corresponding switching element to feed a current to the corresponding resistor and the switching element, and then turns off the switching element to feed the current to the resistor and the LED.

## Description

### TECHNICAL FIELD

The present invention relates to a sequential circuit for an LED lighting device to be mounted on a vehicle such as an automobile and a motorcycle.

### BACKGROUND ART

A circuit described in Japanese Patent Application Publication No. 2008-105674 has been known as a conventional sequential circuit for an LED lighting device. In this sequential circuit, blinkers serving as components of a conventional lighting circuit are mounted on right and left sides of a vehicle such as an automobile. Each blinker is configured to indicate a traveling direction by blinking a bulb. In one of the blinkers mounted on the right and left sides of the automobile or the like, the bulb may go out, for example.

In this case, a controller installed on the vehicle side detects that an electric current does not flow on the one of the bulbs, and turns the bulb of the other blinker to a high flasher state in which the bulb blinks in faster cycles than usual. Thus, it is possible to let a driver recognize that the bulb went out.

Meanwhile, when the conventional lighting circuit of this type is put into a sequential operation, each blinker can indicate the traveling direction by sequentially turning on multiple LEDs (light-emitting diodes) one by one. In this case, the LEDs are set to have a predetermined level of power consumption when all the LEDs are turned on, which is equivalent to power consumption by the original bulb of the blinker.

However, a current flowing on the LEDs on one of the blinkers is very small at a point immediately after the start of the sequential operation, and the power consumption at that point does not reach the above-mentioned predetermined level of power consumption. As a consequence, the controller installed on the vehicle side is likely to determine that these LEDs are broken down, and to make the blinking cycle of the LEDs on the other blinker faster.

An object of the present invention is to provide a sequential circuit for an LED lighting device, which is capable of causing LEDs to blink in normal blinking cycles by establishing predetermined power consumption equivalent to power consumption by an original bulb of a blinker from immediately after a start of a sequential operation.

### SUMMARY OF INVENTION

To solve the above-mentioned problems, a sequential circuit for an LED lighting device according to the invention includes: multiple LEDs; multiple switching elements provided corresponding to the multiple LEDs, each switching element being connected in parallel with the corresponding one of the LEDs; multiple resistors provided corresponding to the multiple LEDs, each resistor being connected in series with the corresponding one of the LEDs and the corresponding one of the switching elements, and receiving a power supply at the time of an instruction to start energization; and a controller configured to sequentially turn on the multiple LEDs, to turn on each switching element prior to turning on the corresponding LED to feed a current to the corresponding resistor and the switching element, and then to turn off the switching element to feed the current to the resistor and the LED.

### EFFECT OF INVENTION

According to the present invention, switching elements are connected in parallel with the LEDs, respectively. Meanwhile, the controller sequentially turns on the multiple LEDs, turns on each switching element prior to turning on the corresponding LED to feed a current to a corresponding resistor and the switching element, and then turns off the switching element to feed the current to the resistor and the LED.

It is therefore possible to establish predetermined power consumption equivalent to power consumption by original bulbs of blinkers from immediately after a start of a sequential operation, and thus to cause the LEDs to blink at a normal blinking cycle.

### BRIEF DESCRIPTION OF DRAWINGS

Fig. 1 is a basic circuit configuration diagram of a sequential circuit for an LED lighting device according to an embodiment 1 of the present invention.
Fig. 2 is a specific circuit configuration diagram of the sequential circuit for an LED lighting device according to the embodiment 1 of the present invention.
Fig. 3 is a timing chart for explaining actions of components in the sequential circuit for an LED lighting device according to the embodiment 1 of the present invention shown in Fig. 2.

### DESCRIPTION OF EMBODIMENTS

An embodiment of a sequential circuit for an LED lighting device according to the present invention will be described below in detail with reference to the drawings.

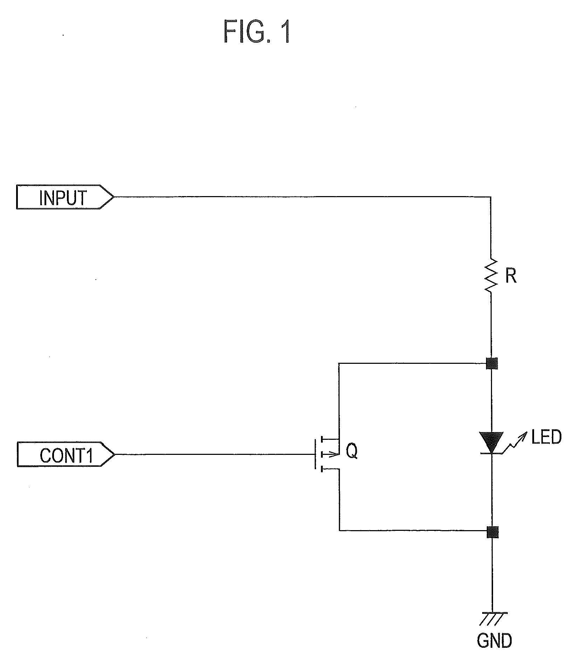

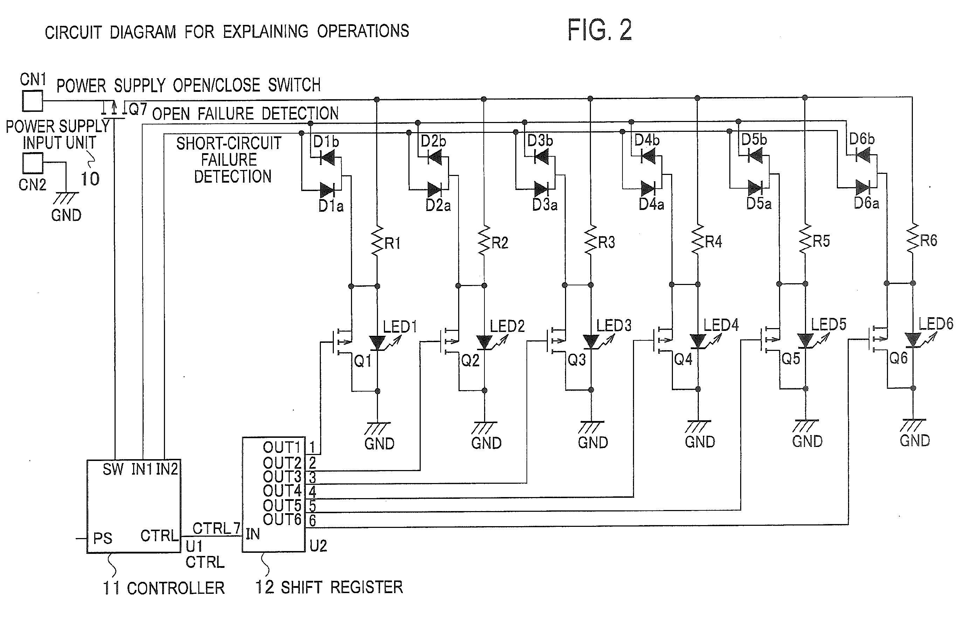

Fig. 1 is a basic circuit configuration diagram of a sequential circuit for an LED lighting device according to Embodiment 1 of the present invention. The example shown in Fig. 1 will be described on the premise that a single LED is provided therein. To be specific, however, multiple LEDs are provided as shown in Fig. 2. The sequential circuit for an LED lighting device of Embodiment 1 is used for sequential LED blinkers for an automobile or a motorcycle.

A power supply input unit INPUT is connected to one end of a resistor R and inputs a power supply to the resistor R. An anode of an LED and a source of a switching element Q are connected to another end of the resistor R. The switching element Q is formed from a P-channel type MOSFET.

A cathode of the LED and a drain of the switching element Q are connected to ground GND. A control signal CONT1 is applied from a not-illustrated controller to a gate of the switching element Q.

Next, a description will be given of a basic operation of the sequential circuit for an LED lighting device of the embodiment 1 configured as mentioned above.

First, when energization of the sequential circuit for an LED lighting device is initiated by starting to turn on a blinker, the switching element Q is turned on by the control signal CONT1 at an L level. Hence, a current from the power supply input unit INPUT flows to the resistor R, then to the switching element Q, and then to the ground GND. For this reason, although the LED is not turned on, the current flows to the ground GND via the resistor R, whereby the current is consumed by the resistor R.

Next, the switching element Q is turned off by the control signal CONT1 at an H level. Then, the current from the power supply input unit INPUT flows to the resistor R, then to the LED, and then to the ground GND. Thus, it is possible to turn the LED on.

According to the operation described above, by continuously feeding the electric current to the sequential circuit for an LED lighting device both when the LEDs are turned off and when the LEDs are turned on, it is possible to feed the current equal to or above a current value with which the controller on the vehicle side determines that any of the LEDs is broken down.

In other words, it is possible to establish predetermined power consumption equivalent to power consumption by original bulbs of blinkers from immediately after the start of the sequential operation. Thus, the controller on the vehicle side does not have to make a blinking cycle of the LEDs on the other side faster, and can thus cause the LEDs to blink in normal blinking cycles.

Fig. 2 is a specific circuit configuration diagram of the sequential circuit for an LED lighting device according to the embodiment 1 of the present invention. The sequential circuit for an LED lighting device of Embodiment 1 shown in Fig. 2 includes multiple LED 1 to LED 6, multiple switching elements Q1 to Q6, multiple resistors R1 to R6, a controller 11, and a shift register 12.

The multiple switching elements Q1 to Q6 are provided corresponding to the LED 1 to the LED 6, and are connected in parallel with the LED 1 to the LED 6, respectively. The multiple resistors R1 to R6 are provided corresponding to the LED 1 to the LED 6, and are connected in series with the LEDs and the switching elements, respectively. A power supply from a power supply input unit 10 is applied to the resistors R1 to R6 at the time of an instruction to start energization.

The power supply input unit 10 includes a positive electrode CN1 and a negative electrode CN2. The positive electrode CN1 is connected to a source of a power supply open/close switch Q7 formed from a P-channel type MOSFET. The negative electrode CN2 is connected to ground GND.

One end of each of the resistors R1 to R6 is connected to a drain of the power supply open/close switch Q7. Another end of each of the resistors R1 to R6 is connected to an anode of the corresponding one of the LED 1 to the LED 6 and to a source of the corresponding one of the switching elements Q1 to Q6. Cathodes of the LED 1 to the LED 6 and drains of the switching elements Q1 to Q6 are connected to the ground GND.

A cathode of each of diodes D1a to D6a and an anode of the corresponding one of diodes D1b to D6b are connected to the anode of the corresponding one of the LED 1 to the LED 6 and to the source of the corresponding one of the switching elements Q1 to Q6.

Anodes of the diodes D1a to D6a and cathodes of the diodes D1b to D6b are connected to the controller 11. The diodes D1a to D6a are configured to detect short-circuit failures of the LED 1 to the LED 6, and correspond to short-circuit failure detectors of the present invention. The diodes D1b to D6b are configured to detect open failures of the LED 1 to the LED 6, and correspond to open failure detectors of the present invention.

The controller 11 outputs a control signal CTRL to the shift register 12 and sequentially turns on the LED 1 to the LED 6. In addition, prior to turning on the LEDs, the controller 11 turns on the switching elements to feed the current to the resistors and the switching elements, and then turns off the switching elements to feed the current to the resistors and the LEDs.

The shift register 12 generates sequential signals OUT1 to OUT6 for sequentially turning on the LED 1 to the LED 6 based on the control signal CTRL from the controller 11, and outputs the sequential signals OUT1 to OUT6 to gates of the switching elements Q1 to Q6, respectively.

Meanwhile, when any of the diodes D1a to D6a detects a short-circuit failure of any of the LED 1 to the LED 6, the controller 11 turns off the power supply open/close switch Q7. When any of the diodes D1b to D6b detects an open failure of any of the LED 1 to the LED 6, the controller 11 turns off the power supply open/close switch Q7.

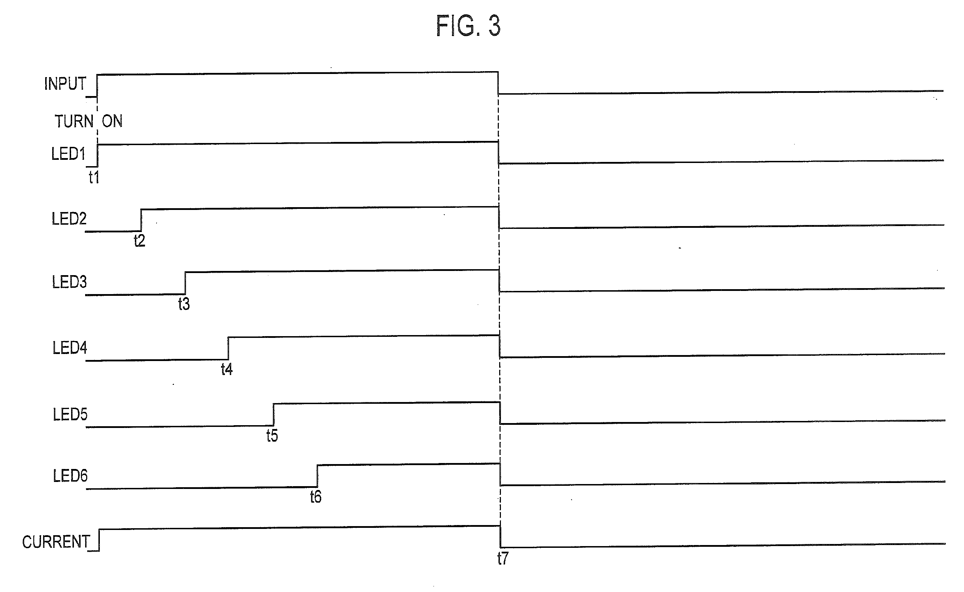

Fig. 3 is a timing chart for explaining actions of the components in the sequential circuit for an LED lighting device according to Embodiment 1 of the present invention shown in Fig. 2.

Next, an operation of the sequential circuit for an LED lighting device of Embodiment 1 shown in Fig. 2 and configured as mentioned above will be described with reference to the timing chart shown in Fig. 3.

First, at the start of energization, the switching elements Q1 to Q6 are turned on and initialized by using signals from the shift register 12.

Next, the power supply open/close switch Q7 is turned on by using a signal from the controller 11. At this point, i.e., at time t1, the power supply is inputted from the power supply input unit 10. Accordingly, the power supply from the power supply input unit 10 is applied to the one end of each of the resistors R1 to R6.

At the time t1, the switching element Q1 is turned off by using the sequential signal OUT1 from the shift register 12. Accordingly, the current from the power supply input unit 10 flows to the resistor R1, then to the LED 1, and then to the ground GND, whereby the LED 1 is turned on.

Next, in a period from the time t1 to time t2, the switching element Q2 is on due to the sequential signal from the shift register 12 at the time of initialization. Accordingly, the current from the power supply input unit 10 flows to the resistor R2, then to the switching element Q2, and then to the ground GND, whereby the LED 2 remains turned off.

At the time t2, the switching element Q2 is turned off by using the sequential signal OUT2 from the shift register 12. Accordingly, the current from the power supply input unit 10 flows to the resistor R2, then to the LED 2, and then to the ground GND, whereby the LED 2 is turned on.

Next, in a period from the time t1 to time t3, the switching element Q3 is on due to the sequential signal from the shift register 12 at the time of initialization. Accordingly, the current from the power supply input unit 10 flows to the resistor R3, then to the switching element Q3, and then to the ground GND, whereby the LED 3 remains turned off.

At the time t3, the switching element Q3 is turned off by using the sequential signal OUT3 from the shift register 12. Accordingly, the current from the power supply input unit 10 flows to the resistor R3, then to the LED 3, and then to the ground GND, whereby the LED 3 is turned on.

Next, in a period from the time t1 to time t4, the switching element Q4 is on due to the sequential signal from the shift register 12 at the time of initialization. Accordingly, the current from the power supply input unit 10 flows to the resistor R4, then to the switching element Q4, and then to the ground GND, whereby the LED 4 remains turned off.

At the time t4, the switching element Q4 is turned off by using the sequential signal OUT4 from the shift register 12. Accordingly, the current from the power supply input unit 10 flows to the resistor R4, then to the LED 4, and then to the ground GND, whereby the LED 4 is turned on.

Next, in a period from the time t1 to time t5, the switching element Q5 is on due to the sequential signal from the shift register 12 at the time of initialization. Accordingly, the current from the power supply input unit 10 flows to the resistor R5, then to the switching element Q5, and then to the ground GND, whereby the LED 5 remains turned off.

At the time t5, the switching element Q5 is turned off by using the sequential signal OUT5 from the shift register 12. Accordingly, the current from the power supply input unit 10 flows to the resistor R5, then to the LED 5, and then to the ground GND, whereby the LED 5 is turned on.

Next, in a period from the time t1 to time t6, the switching element Q6 is on due to the sequential signal from the shift register 12 at the time of initialization. Accordingly, the current from the power supply input unit 10 flows to the resistor R6, then to the switching element Q6, and then to the ground GND, whereby the LED 6 remains turned off.

At the time t6, the switching element Q6 is turned off by using the sequential signal OUT6 from the shift register 12. Accordingly, the current from the power supply input unit 10 flows to the resistor R6, then to the LED 6, and then to the ground GND, whereby the LED 6 is turned on.

Next, at time t7, the LED1 to the LED 6 are turned off by turning the power supply input unit 10 off.

According to the sequential circuit for an LED lighting device of Embodiment 1 described above, the switching elements Q1 to Q6 are connected in parallel with the LED 1 to the LED 6, respectively. The controller 11 sequentially turns on the LED 1 to the LED 6. In addition, prior to turning on the LED 1 to the LED 6, the controller 11 turns on the switching elements Q1 to Q6 to feed the current to the resistors R1 to R6 and the switching elements Q1 to Q6, and then turns off the switching elements Q1 to Q6 to feed the current to the resistors R1 to R6 and the LED 1 to the LED 6.

As a consequence, it is possible to establish predetermined power consumption equivalent to power consumption by original bulbs of blinkers from immediately after the start of the sequential operation, and thus to cause the LED 1 to the LED 6 to blink in normal blinking cycles.

Meanwhile, it is not necessary to provide a resistor and the like only for the purpose of turning on the LED 1 to the LED 6 normally. Since the resistor only for turning on the LED 1 to the LED 6 normally is not provided, the power consumption when all the LED 1 to the LED 6 are turned on is equivalent to the power consumption of the original bulbs. Thus, an extra burden on the vehicle is avoided.

In the meantime, if one of the LED 1 to LED 6, such as the LED 1 causes an open failure, a voltage from the power supply input unit 10 is inputted to the controller 11 via the resistor R1 and the diode D1b. As the inputted voltage exceeds a threshold voltage, the controller 11 determines that the LED 1 caused the open failure, and turns off the power supply open/close switch Q7.

In other words, by turning off the power supply open/close switch Q7 and cutting off the power consumption, it is possible to notify the controller, which is provided on the vehicle side, of the presence of the failure in one of the LEDs in the sequential circuit for an LED lighting device.

On the other hand, if one of the LED 1 to LED 6, such as the LED 2 causes a short-circuit failure, the cathode of the diode D2a is connected to the ground GND via the LED 2. Accordingly, the current flows from the controller 11 to the ground GND via the diode D2a and the LED 2. For this reason, the controller 11 determines that the LED 2 caused the short-circuit failure, and turns off the power supply open/close switch Q7.

In other words, by turning off the power supply open/close switch Q7 and cutting off the power consumption, it is possible to notify the controller, which is provided on the vehicle side, of the presence of the failure in one of the LEDs in the sequential circuit for an LED lighting device.

### EXPLANATION OF REFERENCE NUMERALS

- R, R1 to R6: resistor
- Q, Q1 to Q6: switching element
- LED, LED 1 to LED 6: light-emitting diode
- D1a to D6b: diode
- Q7: power supply open/close switch
- 10: power supply input unit
- 11: controller
- 12: shift register

## Claims

1. A sequential circuit for an LED lighting device comprising:
a plurality of LEDs;
a plurality of switching elements provided corresponding to the plurality of LEDs, each switching element connected in parallel with the corresponding LED;
a plurality of resistors provided corresponding to the plurality of LEDs, each resistor connected in series with the corresponding LED and the corresponding switching element, and receiving a power supply at the time of an instruction to start energization; and
a controller configured to sequentially turn on the plurality of LEDs, and to, prior to turning on each of the LEDs, turn on the corresponding switching element to feed a current to the corresponding resistor and the switching element, and then turn off the switching element to feed the current to the resistor and the LED.

2. The sequential circuit for an LED lighting device according to claim 1, further comprising:
a plurality of open failure detectors provided corresponding to the plurality of LEDs, each open failure detector configured to detect an open failure of the corresponding LED, wherein
the controller determines an open failure of at least one of the LEDs based on a detection output from the corresponding one of the plurality of open failure detectors.

3. The sequential circuit for an LED lighting device according to claim 1 or 2, further comprising:
a plurality of short-circuit failure detectors provided corresponding to the plurality of LEDs, each short-circuit failure detector configured to detect a short-circuit failure of the corresponding LED, wherein
the controller determines a short-circuit failure of at least one of the LEDs based on a detection output from the corresponding one of the plurality of short-circuit failure detectors.
